# FASCICULE DE BREVET EUROPEEN

(11) **EP 0 800 436 B1**
(45) Date de publication et mention de la délivrance du brevet: **27.05.1998**
(21) Numéro de dépôt: 95943271.7
(22) Date de dépôt: 22.12.1995
(51) Int. Cl.: B23P 21/00, B62D 65/00

(54) **ATELIER D'ASSEMBLAGE POUR PIECES DE TOLERIE**
MONTAGEWERKSTATT FÜR BLECHE
ASSEMBLY CENTER FOR SHEET METAL PARTS

(30) Priorité: 29.12.1994 FR 9415860
(43) Date de publication de la demande: 15.10.1997
(73) Titulaire: ABB PRECIFLEX SYSTEMS, 95250 Beauchamp (FR)
(72) Inventeur: NEGRE, Bernard, F-75020 Paris (FR); PINCHON, Gérard, F-78260 Achères (FR)
(74) Mandataire: Robert, Jean-Pierre
(86) Numéro de dépôt international: FR9501727
(87) Numéro de publication internationale: WO9620809

(56) Documents cités:
- EP-A- 0 229 244
- EP-A- 0 438 989
- WO-A-86/03153
- GB-A- 2 270 290
- MACHINERY AND PRODUCTION ENGINEERING, vol. 124, no. 3190, 16 Janvier 1974, BURGESSHILL GB, pages 54-59, XP002000651 J. J. MARKLEW: "Fiat examine fresh techniques for producing motor cars"
- IBM TECHNICAL DISLOSURE BULLETIN, vol. 27, no. 12, Mai 1985, ARMONK NY USA, pages 6876-6877, XP002000652 "Adaptable automatic circuit board transportation system"

## Description

La présente invention concerne un atelier de production d'ensembles de tôlerie dans lequel on procède par étapes à l'assemblage d'éléments maintenus dans des positions relatives déterminées et précises.

Dans le domaine de la carrosserie automobile un sous-ensemble de carrosserie est construit à partir d'éléments dont la préparation consiste à les disposer les uns par rapport aux autres dans une sorte de gabarit, ce gabarit étant ensuite transporté et mis en place dans un poste où les éléments maintenus rassemblés sont fixés les uns aux autres notamment par des points de soudure. On a alors réalisé un premier sous-ensemble qui, si nécessaire, est amené dans un second poste de préparation pour qu'il y soit adjoint d'autres éléments individuels. On procède ensuite à l'assemblage précis par points de soudure de ce nouvel ensemble enrichi.

Cette séquence d'opération peut se répéter autant de fois que nécessaire pour obtenir la réalisation complète de l'ensemble.

Habituellement les postes de confection d'un tel ensemble sont disposés le long d'une direction générale donnée par un moyen de convoyage général qui dessert chaque poste de préparation, d'assemblage et de finition. On a ainsi constitué une ligne d'assemblage dans laquelle les postes se commandent les uns les autres et dont les postes, tant dans leur nombre que dans leur succession, sont peu aptes à la réalisation d'ensembles de tôlerie différents les uns des autres. En outre, l'accessibilité à chacun des postes d'une telle ligne est réduite car l'espace disponible autour de chaque poste est limité.

La présente invention entend remédier aux inconvénients que présentent les ateliers classiques d'assemblage d'ensembles de tôlerie, en proposant une organisation d'ateliers modulaires qui présentent un motif standard comprenant toutes les fonctions nécessaires à la préparation, à l'assemblage et à la finition d'un sous-ensemble et qu'il suffit de multiplier en fonction de la complexité et du nombre des pièces constituant l'ensemble final pour répondre pratiquement à tous les besoins rencontrés dans ce type d'industrie.

A cet effet l'invention a donc pour objet un atelier d'assemblage de pièces de tôlerie comportant des postes de préparation destinés à mettre en place les pièces les unes par rapport aux autres, des postes d'assemblage destinés à fixer les unes aux autres les pièces préparées et le cas échéant des postes de finition destinés à compléter la fixation des pièces les unes aux autres. Plus précisément cet atelier est constitué par une pluralité de modules reliés par au moins un moyen de convoyage général s'étendant le long d'une direction déterminée, chaque module comportant une station centrale de chargement-déchargement traversée par le moyen de convoyage général, une station de préparation latérale reliée à la station centrale par un convoyeur sensiblement perpendiculaire au moyen de convoyage général, une station d'assemblage reliée à la station centrale par un convoyeur sensiblement perpendiculaire au moyen de convoyage général et le cas échéant une station de finition située le long du moyen de convoyage général en aval de la station centrale.

L'un des avantages de ce type de structure réside dans la rationalisation des équipements et des outillages à mettre en oeuvre qui peuvent devenir standards quel que soit le type d'ensembles de tôlerie réalisé.

Il sera avantageux de prévoir que les stations d'assemblage des modules qui composent l'atelier sont situées d'un même côté du moyen de convoyage général. Ceci permet en effet, lorsque l'atelier d'assemblage comporte deux pluralités de modules pour la réalisation d'au moins deux ensembles de tôlerie différents, que la station d'assemblage de chaque module d'une pluralité soit commune avec celle du module correspondant de l'autre pluralité.

D'une manière générale, les pièces de tôlerie à assembler, pour constituer des sous-ensembles ou des ensembles, sont mises en place dans des supports, genre de gabarits qui peuvent prendre plusieurs formes. Il peut en effet s'agir de palettes dans lesquelles les pièces à assembler sont mises en place, maintenues et transportées d'une station à l'autre dans un même module. Il peut également s'agir de supports plus légers (appelés cassettes) qui restent associés aux pièces assemblées tout au long de la confection de l'ensemble. Dans le cas des palettes, seules les pièces circulent de module en module alors que les cassettes accompagnent les pièces d'un module à l'autre.

Ainsi, de manière avantageuse, l'atelier selon l'invention peut comporter des moyens de manutention des palettes pour les déplacer entre la station de chargementdéchargement de chaque module et une ou plusieurs zones de stockage situées au voisinage de cette station. De préférence, ces moyens de manutention s'étendent dans la direction du moyen de convoyage général entre la station de chargement-déchargement et au moins une station de stockage de palette. Dans un mode préféré de réalisation cette station de stockage est située sous le moyen de convoyage général en aval de la station de chargement-déchargement et, s'il existe une station de finition à cet endroit, sous cette station de finition.

D'autres caractéristiques et avantages ressortiront de la description d'un exemple de réalisation de l'invention donné ci-après à titre non limitatif.

Il sera fait référence aux dessins annexés parmi lesquels :
- la figure 1 est un schéma illustrant le module de base mis en oeuvre dans un atelier conforme à l'invention,
- les figures 2 à 9 illustrent les différentes phases de fonctionnement d'un module conforme à l'invention,
- la figure 10 est un schéma représentant partiellement un atelier d'assemblage comportant deux lignes de fabrication de deux ensembles de tôlerie semblables mais non identiques.

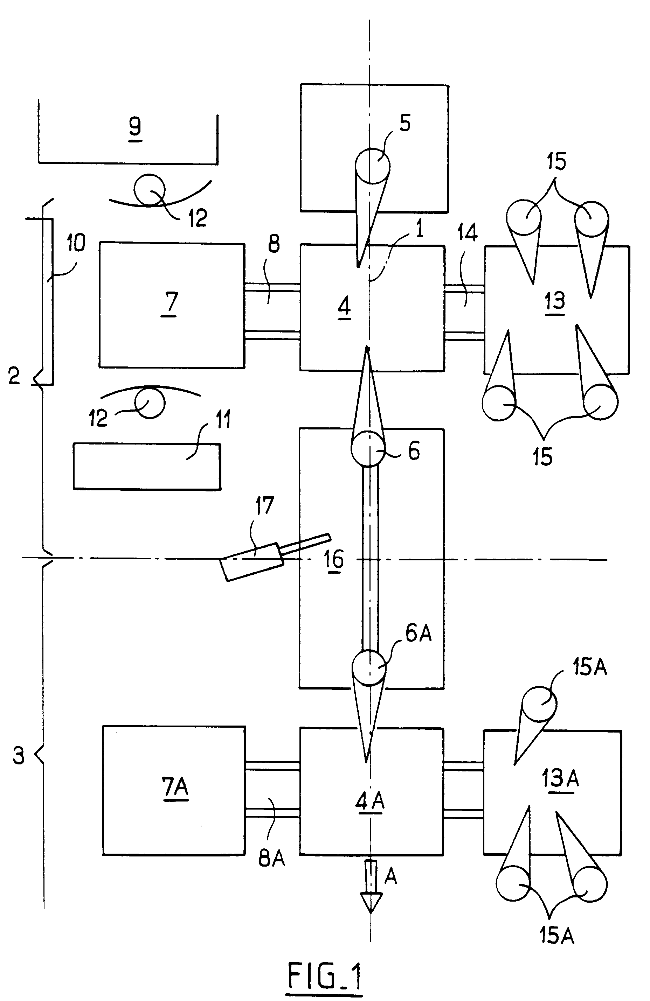

A la figure 1, la référence 1 concerne un moyen général de convoyage dont la direction représentée par la flèche A est déterminée et constitue le sens général du flux de la production. Conformément à l'invention ce convoyeur général 1 relie plusieurs modules 2, 3 par le moyen desquels l'ensemble de tôlerie est progressivement constitué et assemblé. Un atelier est donc constitué par une pluralité de modules tels que 2 et 3 desservis par un moyen de convoyage général 1 et dans lequel chaque module est organisé de manière standard comme décrit ci-après en regard du module 2.

Le module 2 comporte une station centrale 4 traversée par la ligne du moyen de convoyage général 1. Cette station centrale comporte des moyens 5 et 6 de chargement et déchargement ici représentés par des robots de manutention. Le module 2 comporte également une station 7 de préparation latérale reliée à la station centrale 4 par un convoyeur 8 qui s'étend dans une direction sensiblement perpendiculaire à la direction A du convoyeur général 1. Dans cette station de préparation, on réalise la mise en place des différentes pièces ou sous-ensembles qu'il conviendra de fixer entre elles, prélevées dans de magasins 9 et 10 situés au voisinage de la station 7 ou de postes secondaires il de préparation également situés dans ce voisinage. Des servants 12 assurent ce travail de préparation. Ces servants peuvent être des opérateurs ou des machines de manutention et mise en position, des robots par exemple. Les différentes pièces peuvent être avantageusement regroupées sous forme d'une collection pour réduire le temps de mise en place. La mise en place des différents éléments à fixer entre eux à la station 7 est opérée au moyen de supports formant gabarit de maintien de ces éléments dans leur position relative déterminée.

Le module 2 possède également une station d'assemblage 13 qui est reliée à la station centrale 4 par un convoyeur 14 sensiblement perpendiculaire à la direction A du moyen de convoyage général 1. Cette station 13 comporte des robots de soudure 15, ou tout autre moyen d'assemblage équivalent, qui sont programmés pour réaliser la fixation des pièces préparées à la station 7.

Enfin le module 2 comporte une station 16 qui est desservie par le moyen général de convoyage 1, en aval de la station 4 et qui constitue une station de finition, c'est-à-dire une station dans laquelle on réalise des opérations complémentaires telles que des points de soudure ou des dépôts de colle, des poinçonnages, la pose de goujons..., par exemple au moyen d'un outil au sol 17. L'élément traité dans cette station 16 est porté par le moyen général de convoyage qui est ici représenté par le robot 6 de déchargement de la station 4 lui-même mobile au travers de la station 16 pour d'une part desservir la pince 17 et d'autre part constituer dans sa position 6A le moyen de chargement d'une station 4A de chargement-déchargement du module 3 suivant le module 2 dans le sens A du convoyeur général 1. Les moyens de manutention 6 peuvent bien entendu être assistés par des moyens de mise en place solidaires de la station 16 comme par exemple des butées de positionnement associées à l'outil au sol 17.

On supposera que le module 2 est un module de début de ligne. Dans ce cas, le robot 5 de chargement mettra en place sur la station 4 un gabarit, du genre cassette de mise en référence d'un certain nombre d'éléments à assembler, c'est-à-dire un support qui reste solidaire des pièces et circule avec elles de module en module. Au moyen du convoyeur 8 cette cassette sera transférée à la station 7 où elle sera garnie des pièces et éléments à assembler par les opérateurs 12. Cette cassette équipée est ensuite transférée à la station 13 au moyen du convoyeur 8 et du convoyeur 14, via la station 4 de chargement-déchargement. A la station 13 les robots 15 procèdent à la réalisation de la fixation mutuelle des éléments portés par la cassette. Cette station 13 est une station dite de géométrie, c'est-à-dire qu'elle comporte des éléments de mise en place très précise de la cassette dans le repère des robots de soudure 15 et/ou des moyens de positionnement de tout ou partie des éléments portés par la cassette qui peuvent être, à la station 13, au moins partiellement dissociés de cette cassette pour être pris en charge directement par des outils de géométrie associés à la station 13. Pendant la réalisation de cette fixation, on aura chargé à la station 4 une autre cassette à garnir par exemple par le robot 5.

Lorsque l'assemblage du sous-ensemble est réalisé à la station 13, celui-ci est transféré par le convoyeur 14 à la station 4 en même temps que la cassette qui s'y trouvait est transférée à la station 7 pour y être garnie. Le robot 6 décharge la station 4 du sous-ensemble assemblé et le présente en regard de la ou des pinces de soudure 17 de finition de la solidarisation mutuelle des pièces du sous-ensemble assemblé à la station 13.

Dans sa position 6A le robot 6 procède au placement du sous-ensemble ainsi réalisé (éventuellement avec sa cassette) dans la station centrale 4A du module suivant 3. Au cas où le sous-ensemble n'est pas associé à une cassette, il est seul placé à la station centrale 4A du module 3 qui comporte un gabarit pour le recevoir. Dans ce module, le sous-ensemble est enrichi d'autres éléments à la station 7A et, de la même manière que dans le module 2, ces éléments nouveaux sont assemblés à la station 13A.

Il faut noter que le convoyeur général 1 peut être constitué par une succession de moyens de convoyage différents les uns des autres tels que des robots, des moyens de convoyage au sol, des moyens de convoyage aériens, .... Le schéma de la figure 1 fait clairement apparaître l'un des principaux avantages de l'organisation interne d'un module, à savoir que la station 7 de préparation est accessible par trois de ses côtés et dans une zone dépourvue de tout mécanisme tournant tels que des robots ou autres convoyeurs qui pourraient poser des problèmes de sécurité aux opérateurs qui s'y trouvent. L'espace ainsi disponible pour l'accès à cette station 7 peut être utilement utilisé pour la constitution des magasins de pièces alimentant cette station 7 ainsi que pour la mise en place de moyens de manutention. Ces magasins 9, 10 et les postes de préparation secondaires tel que le poste 11 sont eux aussi aisément accessibles pour leur réapprovisionnement.

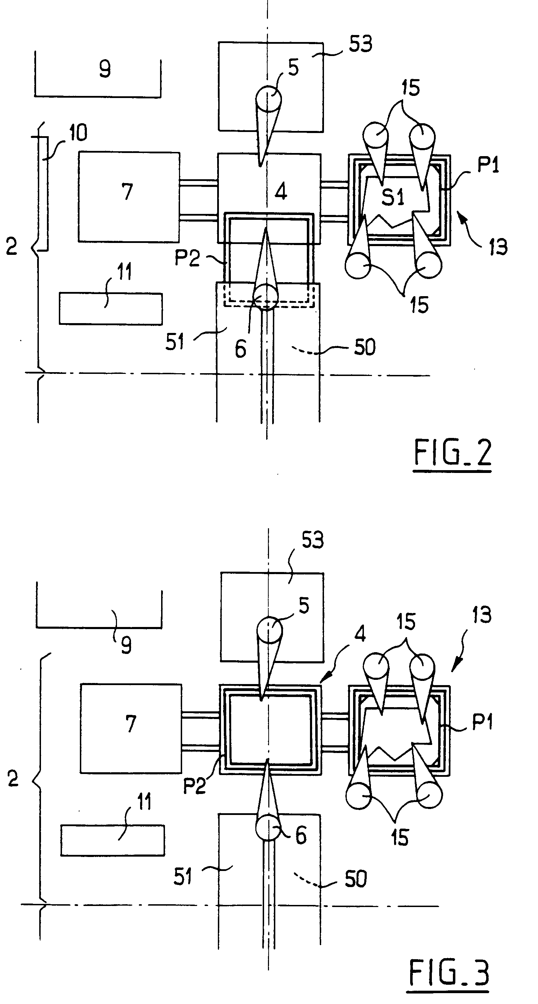

Les figures 2 à 9 illustrent le fonctionnement d'un module conforme à l'invention lorsque les éléments à assembler sont réunis sur un gabarit en forme de palette et non de cassette, c'est-à-dire qui ne voyage pas de module en module avec les pièces. Les éléments déjà décrits précédemment portent les mêmes signes de référence.

Par ces figures on a illustré la confection dans un même module de deux sous-ensembles différents S1 et S2 faisant appel à deux palettes différentes P1 et P2. Bien entendu, ce qui suit vaut pour des sous-ensembles identiques et des palettes identiques. La figure 2 illustre la phase pendant laquelle l'assemblage du sous-ensemble S1 est en cours de réalisation à la station 13 tandis que la palette P2 est transférée d'une station de stockage 50, ici située sous une plate-forme 51 de support du robot 6, vers la station centrale 4.

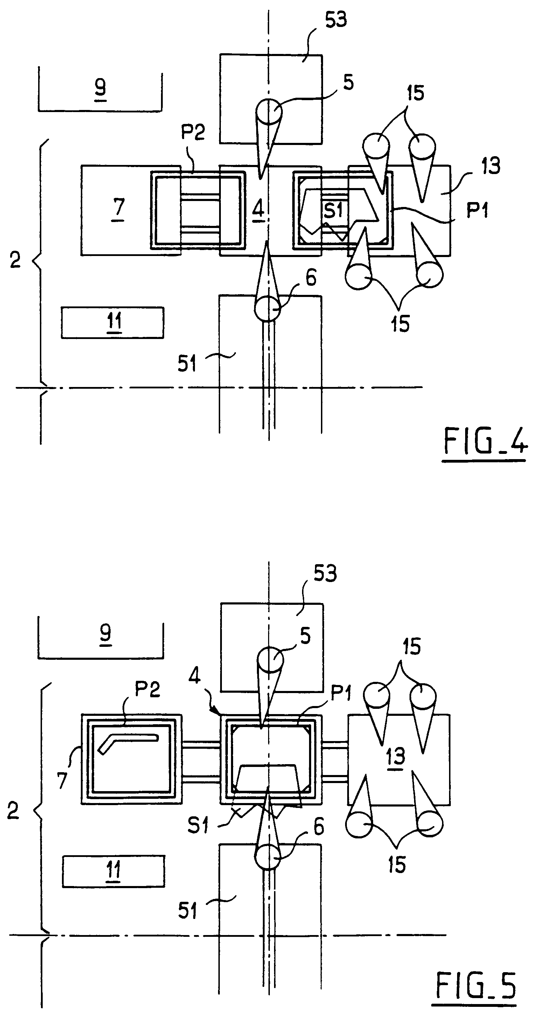

L'opération d'assemblage de l'ensemble S1 étant terminée, la figure 4 illustre le transfert simultané de la palette P1 de la station 13 à la station 4 et de la palette P2 de la station 4 à la station 7.

A la figure 5, la palette P2 est garnie des éléments constitutifs du sous-ensemble S2 tandis que l'ensemble S1 est extrait de la palette P1 au moyen du robot 6 qui la convoiera jusqu'au module 3 suivant.

Au moyen par exemple du robot 5 (ou de tout autre moyen de convoyage approprié) la palette P1 vide est transférée de la station 4 vers une station de stockage 52, ici située sous la plate-forme 53 du support du robot 5. Dans le même temps, les opérateurs continuent de garnir la palette P2 à la station 7.

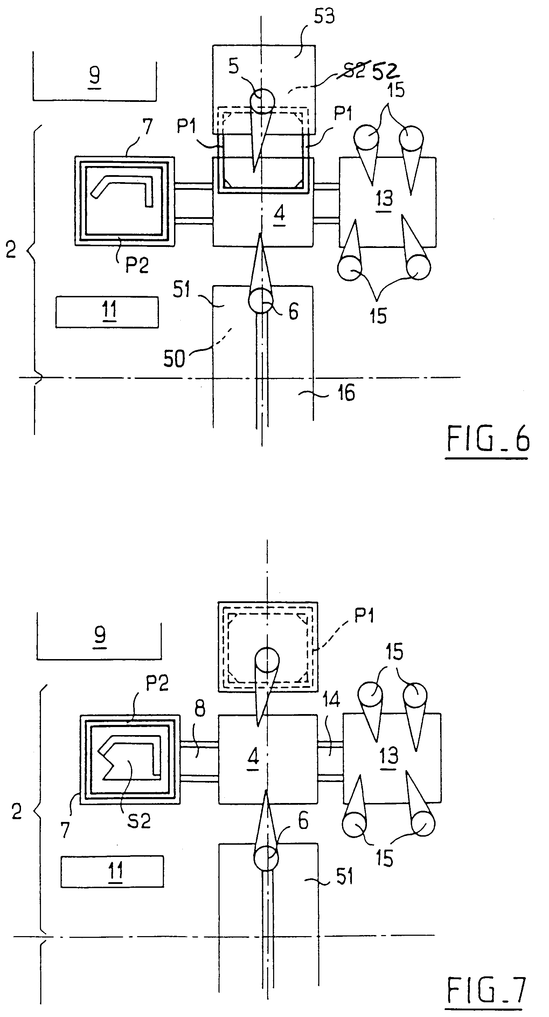

La figure 7 illustre la fin de cette phase opératoire.

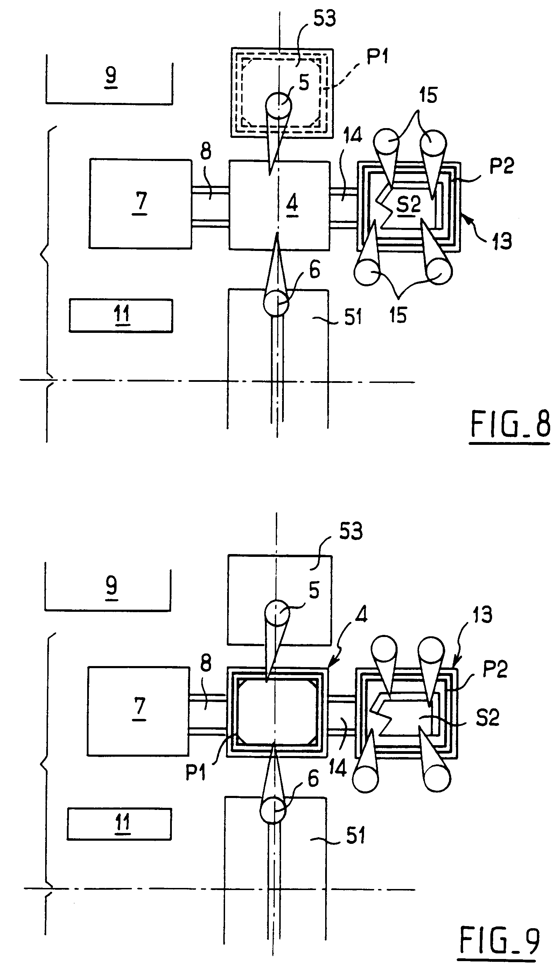

Lorsque la préparation de la palette P2 est terminée, elle est transférée à la station 13 pour exécution des opérations de soudage nécessaires à l'assemblage des pièces. La figure 8 illustre cette phase. Pendant le soudage, comme illustré à la figure 9, la palette P1 est transférée à la station 4 pour être prête à passer à la station 7 quand l'ensemble S2 parviendra, avec la palette P2, à la station 4.

La palette P2 est ensuite séparée de l'ensemble S2 puis stockée à la station 50. Enfin la palette P1 est transférée de la station 7 à la station 13, et le cycle reprend comme illustré par la figure 2.

La séquence opératoire peut être simplifiée s'il s'agit de la confection répétitive de sous-ensembles d'un seul type ne mettant en oeuvre qu'une palette. Cette dernière ne fait que transiter de la station 7 à la station 13 puis de la station 13 à la station 7 avec un arrêt à la station 4 pour son déchargement.

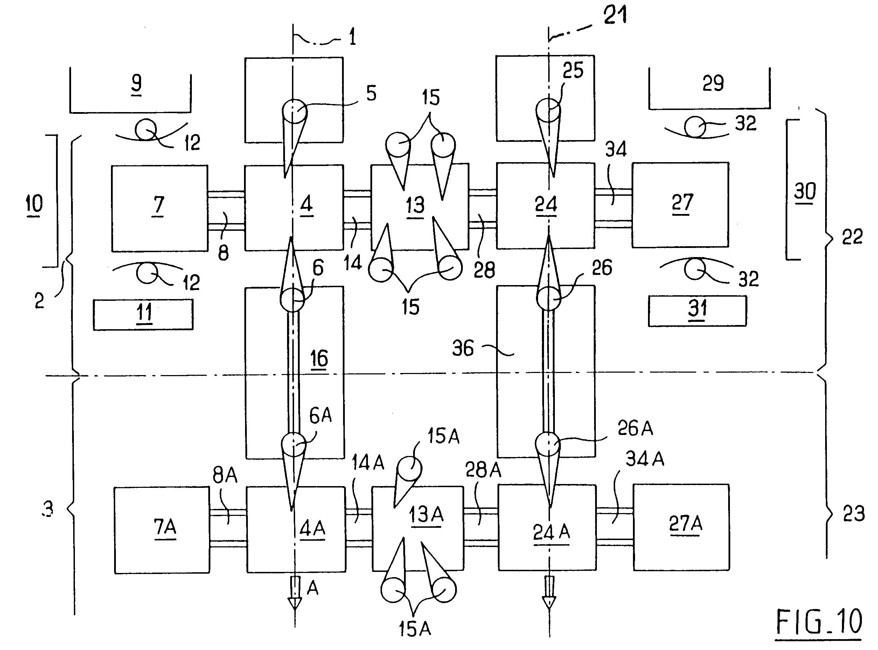

Un autre intérêt important de l'atelier modulaire selon l'invention et notamment de l'architecture de chaque module telle qu'elle vient d'être décrite apparaîtra au vu de la figure 10.

Sur cette figure, on retrouve, le long d'un premier moyen général de convoyage 1 des modules 2, 3 successifs tels que décrits ci-dessus avec les mêmes signes de référence. Parallèlement à cette ligne générale 1 d'assemblage l'atelier représenté à la figure 10 comporte une seconde ligne d'assemblage 21 formée comme la ligne 1, de modules successifs 22, 23 chacun possédant une station centrale 24, 24A, une station de préparation 27, 27A et une station de finition 36, 36A... On remarquera que la station d'assemblage 13 du module 2 constitue également la station d'assemblage du module 22. Il est donc possible de présenter alternativement à cette station d'assemblage 13 soit des pièces ou des sous-ensembles préparés à partir de la station 7, soit des pièces ou des sous-ensembles préparés à partir de la station 27. A la station 13, seules seront différentes les programmations des robots 15 selon que les pièces à pointer proviendront des stations 7 ou des stations 27. Ces modifications peuvent se faire de manière instantanée car il ne s'agit là que d'agir sur le plan de la commande. La station 13 se prête au traitement indifférencié de ces produits et il en résulte un temps d'occupation de cette station 13 optimisé, ce qui présente un intérêt économique substantiel dans la réalisation et l'exploitation d'un atelier conforme à l'invention car c'est au niveau de ces stations 13, 13A... que l'investissement est le plus important, compte tenu des contraintes géométriques particulièrement sévères qu'il faut respecter dans ces stations.

Bien entendu les modules 22 et 23 sont équipés des mêmes éléments que ceux décrits en regard des modules 2 et 3 avec, pour signes de référence, les signes de référence de ceux des modules 2 et 3 augmentés de deux dizaines.

Ce qui est vrai pour deux lignes 1, 21 de modules destinés à la confection d'ensembles différents est encore plus vrai s'il s'agit, pour des raisons de capacité, de fabriquer des ensembles identiques sur deux lignes parallèles ayant en commun à chaque module un poste d'assemblage 13.

On notera enfin que les moyens de chargement-déchargement 5, 6 ; 25, 26 sont utilisés pour transférer les sous-ensembles d'un module à l'autre le long de leur ligne de confection et pour évacuer des stations 4, 24 les gabarits nécessaires au maintien de ces sous-ensembles.

Ce n'est pas sortir du cadre de l'invention que de prévoir des moyens de manutention pour les gabarits P1, P2 autres que les moyens 5, 6, 25, 26 représentés (chaîne au sol, tables mobiles....)

L'invention trouve une application particulièrement intéressante dans le domaine de la construction automobile et notamment dans les lignes d'assemblage de sous-ensembles de caisses automobiles tels que les côtés de caisses. Elle permet également des variantes de réalisation dans lesquelles, par exemple, les sous-ensembles peuvent être extraits de la ligne par les stations 7.

Enfin on mentionnera que dans le cas de deux palettes on peut prévoir le stockage, à l'une des stations 50 ou 52, d'une palette pleine au lieu d'une palette vide. La palette est ensuite dirigée directement à la station 13 pour assemblage puis via la station 4 pour déchargement, à la station 7 pour être à nouveau garnie avant d'être stockée pleine. Le destockage de l'autre palette s'opère pendant le garnissage de l'une et le transfert de la palette destockée vers la station 13 est réalisé en même temps que celui de la palette garnie de la station 7 à la station 4.

## Revendications

1. Atelier d'assemblage de pièces de tôlerie comportant des postes de préparation destinés à mettre en place les pièces les unes par rapport aux autres, des postes d'assemblage destinés à fixer les unes aux autres les pièces préparées, lesdits postes étant reliés par au moins un moyen de convoyage général (1, 21) s'étendant le long d'une direction déterminée (A), caractérisé en ce qu'il est constitué par une pluralité de modules (2, 3, 22, 23), chaque module comportant une station centrale (4, 24) de chargement-déchargement traversée par le moyen (1) de convoyage général, une station (7, 27) de préparation latérale reliée à la station centrale (4, 24) par un convoyeur (8, 28) sensiblement perpendiculaire au moyen de convoyage (1, 21), et une station d'assemblage (13) reliée à la station centrale (4, 24) par un convoyeur (14, 34) sensiblement perpendiculaire au moyen de convoyage général (1, 21).

2. Atelier selon la revendication 1, caractérisé en ce que chaque module comporte au moins une station de stockage (52) pour un support (P1) des pièces traitées dans le module et des moyens (5) de manutention pour déplacer ce support entre cette station de stockage (52) et la station de chargement-déchargement.

3. Atelier selon l'une des revendications 1 ou 2, caractérisé en ce que l'un au moins des modules comporte également au moins une station de finition (16, 36) située le long du moyen de convoyage général (1, 21), en aval de la station centrale (4, 24).

4. Atelier selon la revendication 3, caractérisé en ce que la station de stockage (50) est située sous la station de finition (16).

5. Atelier d'assemblage selon l'une des revendications précédentes, caractérisé en ce que la station d'assemblage (13, 13a) de chacun des modules (2,3) qui le composent, est située d'un même côté du moyen de convoyage général (1).

6. Atelier d'assemblage selon la revendication 5, comportant deux pluralités de modules (2, 3 ; 22, 23) pour la réalisation d'au moins deux ensembles de tôlerie, caractérisé en ce que la station d'assemblage (13) de chaque module (2) d'une pluralité est commune avec celle du module (22) correspondant à l'autre pluralité.

## Claims

1. An assembly workshop for assembling together sheet metal parts, the workshop including preparation stations for putting parts in place relative to one another, and assembly stations for fixing the prepared parts together, said stations being, interconnected by at least one general conveyor means (1, 21) extending in a determined direction (A), characterized in that it is constituted by a plurality of modules (2, 3, 22, 23), each module including a loading and unloading central station (4, 24) through which the general conveyor means (1) passes, a preparation lateral station (7, 27) connected to the central station (4, 24) by a conveyor (8, 28) substantially perpendicular to the conveyor means (1, 21), and an assembly station (13) connected to the central station (4, 24) by a conveyor (14, 34) substantially perpendicular to the general conveyor means (1, 21).

2. A workshop according to claim 1, characterized in that each module includes at least one storage station (52) for storing a support (P1) for supporting the parts processed in the module, and handling means (5) for displacing the support between the storage station (52) and the loading and unloading station.

3. A workshop according to claim 1 or 2, characterized in that at least one of the modules also includes at least one finishing station (16, 36) situated along the general conveyor means (1, 21), downstream from the central station (4, 24).

4. A workshop according to claim 3, characterized in that the storage station (50) is situated under the finishing station (16).

5. An assembly workshop according to any preceding claim, characterized in that the assembly station (13, 13a) of each of the modules (2, 3) making up the workshop is situated on the same side of the general conveyor means (1).

6. An assembly workshop according to claim 5, comprising two sets of modules (2, 3; 22, 23) for assembling at least two sheet metal assemblies, said workshop being characterized in that the assembly station (13) of each module (2) of a set is shared in common by the corresponding module (22) of the other set.

## Patentansprüche

1. Werkstatt zur Montage von Blechteilen, umfassend Vorbereitungsstände zum Anordnen der Teile relativ zueinander und Montagestände zum Befestigen der vorbereiteten Teile aneinander, wobei die Stände durch mindestens eine Hauptfördereinrichtung (1, 21) miteinander verbunden sind, die sich in einer vorgegebenen Richtung erstreckt, dadurch **gekennzeichnet**, daß sie aus einer Mehrzahl von Modulen (2, 3, 22, 23) besteht, deren jeder eine Zentralstation (4, 24) zum Laden und Entladen, durch die die Hauptfördereinrichtung (1) verläuft, eine seitliche Vorbereitungsstation (7, 27), die mit der Zentralstation (4, 24) durch einen im wesentlichen senkrecht zur Hauptfördereinrichtung (1, 21) gerichteten Förderer (8, 28) verbunden ist, und eine Montagestation (13) hat, die mit der Zentralstation (4, 24) durch einen im wesentlichen senkrecht zur Hauptfördereinrichtung (1, 21) gerichteten Förderer (14, 34) verbunden ist.

2. Werkstatt nach Anspruch 1, dadurch **gekennzeichnet**, daß jeder Modul mindestens eine Speicherstation (52) für einen Träger (P1) für die in dem Modul behandelten Teile und eine Handhabungseinrichtung (5) zum Verschieben des Trägers zwischen dieser Speicherstation (52) und der Lade-Entlade-Station umfaßt.

3. Werkstatt nach Anspruch 1 oder 2, dadurch **gekennzeichnet**, daß mindestens einer der Module auch eine Endbearbeitungsstation (16, 36) hat, die entlang der Hauptfördereinrichtung (1, 21) stromabwärts der Zentralstation (4, 24) gelegen ist.

4. Werkstatt nach Anspruch 3, dadurch **gekennzeichnet**, daß die Speicherstation (50) unter der Endbearbeitungsstation (16) angeordnet ist.

5. Werkstatt nach einem der vorangegangenen Ansprüche, dadurch **gekennzeichnet**, daß die Montagestation (13, 13a) jedes der die Werkstatt bildenden Module (2, 3) auf derselben Seite der Hauptfördereinrichtung (1) angeordnet ist.

6. Werkstatt nach Anspruch 5 mit zwei Gruppen von Modulen (2, 3; 22, 23) zur Herstellung mindestens zweier Einheiten aus Blechteilen, dadurch **gekennzeichnet**, daß die Montagestation (13) jedes Moduls (2) einer Gruppe mit jener des entsprechenden Moduls (22) der anderen Gruppe zusammenfällt.
